# EUROPÄISCHE PATENTSCHRIFT

(11) **EP 3 227 162 B1**
(45) Veröffentlichungstag und Bekanntmachung des Hinweises auf die Patenterteilung: **20.01.2021**
(21) Anmeldenummer: 15801372.2
(22) Anmeldetag: 20.11.2015
(51) Int. Cl.: B62D 1/06, B62D 1/04

(54) **SENSORSYSTEM FÜR EIN LENKRAD EINES KRAFTFAHRZEUGS, LENKRAD MIT EINEM SOLCHEN SENSORSYSTEM UND VERFAHREN ZUM BETRIEB EINES SOLCHEN SENSORSYSTEMS**
SENSORSYSTEM FOR A STEERING WHEEL, STEERING WHEEL WITH SUCH SENSORSYSTEM AND METHOD TO OPERATE SUCH SYSTEM
SYSTÈME DE CAPTEURS POUR VOLANT, VOLANT AVEC UN TEL SYSTÈME ET PROCÉCÉ POUR OPÉRER UN TEL SYSTÈME

(30) Priorität: 04.12.2014 DE 102014117821
(43) Veröffentlichungstag der Anmeldung: 11.10.2017
(73) Patentinhaber: Valeo Schalter und Sensoren GmbH, 74321 Bietigheim-Bissingen (DE)
(72) Erfinder: STAUDE, Sascha, 74321 Bietigheim-Bissingen (DE); MAYR, Alexander, 74321 Bietigheim-Bissingen (DE); KAISER, Frank, 74321 Bietigheim-Bissingen (DE)
(74) Vertreter: Pothmann, Karsten
(86) Internationale Anmeldenummer: PCT/EP2015/077209
(87) Internationale Veröffentlichungsnummer: WO 2016/087231

(56) Entgegenhaltungen:
- EP-A1- 2 955 737
- WO-A1-2014/123222

## Beschreibung

Die Erfindung betrifft ein Sensorsystem für ein Lenkrad eines Kraftfahrzeugs mit wenigstens einer kapazitiven Sensoreinrichtung und einer Steuereinrichtung zur Ansteuerung der Sensoreinrichtung, wobei die kapazitive Sensoreinrichtung wenigstens zwei elektrisch leitfähige Sensorstrukturen aufweist und zur Erkennung einer Anwesenheit einer menschlichen Hand in einem Greifbereich eines Lenkrads ausgebildet ist, wobei das Sensorsystem derart ausgebildet ist, dass die Anwesenheit einer menschlichen Hand in einem Detektionsbereich einer Sensorstruktur jeweils eine erfassbare, der jeweiligen Sensorstruktur zugeordnete Änderung einer kapazitiven Kopplung der Sensorstruktur mit der Umgebung und/oder einer Referenzelektrode gegenüber einem Referenzzustand ohne Anwesenheit einer Hand in diesem Detektionsbereich bewirkt.

Außerdem betrifft die Erfindung ein Lenkrad für ein Kraftfahrzeug mit einem solchen Sensorsystem sowie ein Verfahren zum Betrieb eines solchen Sensorsystems.

Sensorsysteme für Lenkräder eines Kraftfahrzeugs zur Hands-On-Off-Erkennung mit kapazitiven Sensoreinrichtungen sind aus dem Stand der Technik grundsätzlich bekannt, beispielsweise aus der DE 203 09 603 U1, welche ein Lenkrad mit sektorweise angeordneten Sensoreinrichtungen offenbart, so dass die Annäherung und/oder Entfernung einer menschlichen Hand sektorweise, d.h. bereichsweise erkannt werden kann. Eine genaue Bestimmung einer Handposition ist mit dieser Anordnung jedoch nicht möglich. WO 2014/123222 A1 beschreibt eine kapazitive Sensoreinrichtung nach dem Oberbegriff des Anspruchs 1.

Es ist Aufgabe der Erfindung, ein verbessertes Sensorsystem für ein Lenkrad bereitzustellen sowie ein verbessertes Lenkrad mit einem solchen Sensorsystem und ein verbessertes Verfahren zum Betrieb eines solchen Sensorsystems, wobei es insbesondere Aufgabe der Erfindung ist, ein Sensorsystem mit einer verbesserten Erkennung der Handposition bereitzustellen.

Diese Aufgabe wird durch ein erfindungsgemäßes Sensorsystem, durch ein erfindungsgemäßes Lenkrad sowie durch ein erfindungsgemäßes Verfahren gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Sensorsystem ist dadurch gekennzeichnet, dass die wenigstens zwei Sensorstrukturen zumindest teilweise kämmend angeordnet sind und zur Anordnung im Greifbereich eines Lenkrads vorgesehen sind, wobei das Sensorsystem derart ausgebildet ist, dass aus dem Verhältnis der erfassten, den einzelnen Sensorstrukturen zugeordneten Änderungen der kapazitiven Kopplungen mit der Umgebung und/oder einer Referenzelektrode eine Position einer menschlichen Hand, die sich im Detektionsbereich der Sensorstrukturen befindet, bestimmbar ist.

D.h. mit anderen Worten, dass die Sensoreinrichtung mehrere Sensorstrukturen aufweist, die abschnittsweise verteilt und zumindest teilweise ineinander kämmend über die Lenkradfläche angeordnet sind.

Dabei sind die Änderung der kapazitiven Kopplung der Sensorstruktur mit der Umgebung und/oder einer Referenzelektrode jeweils den einzelnen Sensorstrukturen zuordbar, so dass erkannt werden kann, in welchem Detektionsbereich und damit im Bereich welcher Sensorstruktur sich eine menschliche Hand oder ein Teil davon befindet.

Durch eine derartige, erfindungsgemäße, zumindest teilweise kämmende Anordnung der einzelnen Sensorstrukturen kann die Handposition am Lenkrad nicht nur sektorweise ermittelt werden, d.h. nur bereichsaufgelöst, sondern auch ortsaufgelöst innerhalb eines definierten Bereiches.

Die Sensoreinrichtung, die zur Erkennung der Anwesenheit einer menschlichen Hand in einem Greifbereich eines Lenkrads ausgebildet ist, insbesondere zur Hands-On-Off-Erkennung, ist dabei insbesondere zur Erkennung einer Annäherung und/oder einer Entfernung einer menschlichen Hand ausgebildet und damit in einem funktionsgemäßen Einbauzustand in einem Lenkrad zur Erkennung einer Annäherung und/oder einer Entfernung einer menschlichen Hand an ein Lenkrad heran bzw. von diesem weg. Bevorzugt ist die Sensoreinrichtung auch dazu ausgebildet, eine Berührung des Lenkrads mit der Hand zu erkennen, insbesondere die Änderung einer Berührung einer menschlichen Hand am Lenkrad, beispielsweise eine Positionsänderung der Hand.

Das Erkennen der Anwesenheit einer menschlichen Hand mittels der kapazitiven Sensoreinrichtung erfolgt dabei nach dem sogenannten "kapazitiven Prinzip", welches darauf beruht, dass die Anwesenheit einer menschlichen Hand im Detektionsbereich der Sensorstruktur eine Änderung der kapazitiven Kopplung der Sensorstruktur mit der Umgebung und/oder einer Referenzelektrode gegenüber einem Referenzzustand ohne Anwesenheit der menschlichen Hand bewirkt, die messtechnisch erfasst werden kann. Dabei hängt die Änderung der kapazitiven Kopplung der Sensorstruktur im Wesentlichen von der Position der Hand im Detektionsbereich der Sensorstruktur ab, so dass insbesondere eine Annäherung und/oder Entfernung bzw. eine Berührung erkannt werden kann.

Kapazitive Sensoreinrichtungen weisen dazu wenigstens eine Sensorstruktur in Form einer Elektrode auf, welche die "Platte" eines elektrischen Kondensators bildet, wobei die Elektrode bzw. die Sensorstruktur die zu sensierende Oberfläche sein kann oder unterhalb der zu sensierenden Oberfläche angeordnet sein kann, in deren Nähe eine Anwesenheit einer menschlichen Hand erkannt werden soll. Dabei bildet die Umgebung und/oder eine in einem kapazitiven Kopplungsbereich der Sensorstruktur angeordnete Referenzelektrode, welche in der Regel an Masse (GND) anliegt und üblicherweise ein Potenzial von 0 Volt aufweist, die zweite "Platte" des Kondensators.

Wird nun ein elektrisch leitendes Material oder ein Dielektrikum, beispielsweise ein menschlicher Finger oder eine menschliche Hand in die unmittelbare Umgebung der Sensorstruktur gebracht, ändert sich die kapazitive Kopplung der Sensorstruktur mit der Umgebung und/oder einer Referenzelektrode, was messtechnisch erfasst werden kann. Anhand dieser Änderung der kapazitiven Kopplung der Sensorstruktur mit der Umgebung und/oder einer Referenzelektrode kann dann auf die Anwesenheit einer menschlichen Hand im Detektionsbereich der Sensorstruktur, insbesondere auf eine Annäherung und/oder Entfernung bzw. eine Berührung durch eine menschliche Hand, rückgeschlossen werden.

Die Erfassung der Änderung der kapazitiven Kopplung der Sensorstruktur kann dabei auf übliche aus dem Stand der Technik bekannte Art und Weise erfolgen, insbesondere mittels eines Schwingkreises, oder mittels einer einfachen Spannungsmessung, beispielsweise mit Hilfe des von der Firma "Microchip" entwickelten CVD (Capacitive Voltage Divider)-Verfahrens.

Bevorzugt wird dabei das sogenannte CVD-Self-Verfahren eingesetzt, bei welchem die Änderung der kapazitiven Kopplung der Sensorstruktur mit der Umgebung erfasst wird oder das sogenannte CVD-Mutual-Verfahrens, bei welchem die Änderung der kapazitiven Kopplung der Sensorstruktur mit einer Referenzelektrode erfasst wird.

Besonders bevorzugt erfolgt die Erfassung der Änderung der kapazitiven Kopplung der Sensorstruktur jedoch mit einer Kombination des CVD-Self-Verfahrens mit dem CVD-Mutual-Verfahren.

Bei einer ganz besonders vorteilhaften Ausführungsform erfolgt die Erfassung der Änderung der kapazitiven Kopplung jedoch mittels des folgenden beschriebenen Verfahrens, welches eine Weiterentwicklung des von der Firma "Microchip" entwickelten CVD-Verfahrens darstellt. Das bevorzugt eingesetzte Verfahren ist dadurch gekennzeichnet, dass zum Erkennen der Anwesenheit einer menschlichen Hand im Greifbereich des Lenkrads, insbesondere zum Erfassen der Änderung der kapazitiven Kopplung der zu sensierenden Sensorstruktur mit der Umgebung, in einem ersten Abtastzyklus in einem ersten Schritt eine Referenzkapazität und eine von der Sensorstruktur und der Umgebung gebildete Messkapazität jeweils mit einem definierten elektrischen Potenzial aufgeladen werden, wobei die Referenzkapazität mit einem ersten elektrischen Potenzial aufgeladen wird und die Messkapazität mit einem zweiten elektrischen Potenzial, in einem weiteren Schritt die Referenzkapazität und die von der Sensorstruktur und der Umgebung gebildete Messkapazität kurzgeschlossen werden, und in einem weiteren Schritt das sich zwischen der Messkapazität und der Referenzkapazität einstellende, resultierende elektrische Potenzial erfasst wird, wobei sich das resultierende elektrische Potenzial in Abhängigkeit vom ersten und zweiten elektrischen Potenzial sowie in Abhängigkeit von der Größe der Referenzkapazität und in Abhängigkeit von der Größe der Messkapazität einstellt.

In einem zweiten Abtastzyklus wird vorzugsweise im ersten Schritt die Referenzkapazität mit dem zweiten elektrischen Potenzial aufgeladen und die Messkapazität mit dem ersten elektrischen Potenzial, in einem weiteren Schritt werden dann vorzugsweise die Referenzkapazität und die von der Sensorstruktur und der Umgebung gebildete Messkapazität kurzgeschlossen, und in einem weiteren Schritt wird insbesondere das sich zwischen der Messkapazität und der Referenzkapazität einstellende, resultierende elektrische Potenzial erfasst, wobei sich das resultierende elektrische Potenzial in Abhängigkeit vom ersten und zweiten Potenzial sowie in Abhängigkeit von der Größe der Referenzkapazität und in Abhängigkeit von der Größe der Messkapazität einstellt.

Weist das Sensorsystem eine Referenzelektrode auf und bewirkt die Anwesenheit einer menschlichen Hand im Detektionsbereich einer Sensoreinrichtung einem Referenzzustand gegenüber eine erfassbare, der Sensorstruktur zugeordnete Änderung einer kapazitiven Kopplung der Sensorstruktur mit der Referenzelektrode, wird bevorzugt in einem weiteren Abtastzyklus, insbesondere in einem zweiten Abtastzyklus und/oder einem dritten und/oder vierten Abtastzyklus, vorzugsweise zusätzlich, in einem ersten Schritt jeweils die Referenzelektrode mit einem definierten elektrischen Potenzial beaufschlagt und in einem weiteren Schritt die kapazitive Kopplung der Sensorstruktur mit der Referenzelektrode erfasst, wobei die ermittelten Änderungen anschließend bevorzugt für die Auswertung miteinander verrechnet werden.

Bevorzugt wird nacheinander, vorzugsweise im Wechsel, insbesondere alternierend, die Änderung der kapazitiven Kopplung der Sensorstruktur mit der Umgebung und die Änderung der kapazitiven Kopplung der Sensorstruktur mit der Referenzelektrode erfasst. Dabei wird vorzugsweise wenigstens eine Sensorstruktur zumindest zeitweise als Referenzelektrode geschaltet, vorzugsweise sämtliche Sensorstrukturen.

Die Änderung der kapazitiven Kopplung der Sensorstruktur kann aber auch mithilfe eines Ladevorgangs, bei dem beispielsweise eine Stromänderung erfasst wird, gemessen werden, oder mittels anderer, entsprechend geeigneter Methoden.

In einer bevorzugten Ausgestaltung weist ein erfindungsgemäßes Lenkrad eine Abschirmeinrichtung zur Abschirmung der Sensoreinrichtung gegenüber störenden kapazitiven Kopplungen mit Komponenten des Lenkrads, insbesondere gegenüber dem Lenkradkern, auf, wobei das Abschirmelement vorzugsweise während der Erfassung einer Änderung der kapazitiven Kopplung wenigstens einer Sensorstruktur mit der Umgebung und/oder einer Referenzelektrode mit einem definierten, elektrischen Potenzial beaufschlagbar ist, insbesondere mit einem Potenzial, das einem während der Erfassung der Änderung der kapazitiven Kopplung an der Sensorstruktur anliegenden Potenzial zumindest teilweise nachgeführt ist, insbesondere mit einem Potenzial, das dem Verlauf des an der Sensorstruktur anliegenden Potenzials folgt.

D.h. bevorzugt ist das Abschirmelement als aktives Abschirmelement schaltbar, d.h. als sogenannter "Guard" bzw. als Schirmungselektrode betreibbar. Sind mehrere Abschirmelemente vorhanden, sind vorzugsweise mehrere Abschirmelemente entsprechend elektrisch leitfähig und mit einem elektrischen Potenzial beaufschlagbar, insbesondere alle Abschirmelemente.

Unter einem nachgeführten Potenzial wird dabei ein Potenzial verstanden, dass zunimmt, wenn das an der Sensorstruktur anliegende Potenzial zunimmt bzw. das abnimmt, wenn das an der Sensorstruktur anliegende Potenzial abnimmt.

Dadurch kann das sich zwischen der Sensorstruktur und der Umgebung und/oder einer Referenzelektrode aufgrund der kapazitiven Kopplung bildende elektrische Feld positiv beeinflusst werden, insbesondere derart, dass eine Grundkapazität der Sensoreinrichtung verringert wird, so dass die Anwesenheit einer menschlichen Hand, insbesondere eine Annäherung und/oder eine Entfernung einer menschlichen Hand, eine größere Änderung der kapazitiven Kopplung bewirkt und somit messtechnisch einfacher und genauer und damit zuverlässiger erfasst werden kann. D.h. mit anderen Worten kann durch die Verwendung eines aktiven Abschirmelements die Auflösung des Sensorsystems verbessert werden, insbesondere das Signal-zu-Rausch-Verhältnis (SNR = Signal to Noise Ratio), wodurch die Erkennungsqualität erheblich gesteigert werden kann.

Bevorzugt kann das Potenzial, mit welchem das Abschirmelement beaufschlagt werden kann, dabei dem an der Sensorstruktur anliegenden Potenzial nicht nur nachgeführt werden, sondern kann dem Verlauf des an der Sensorstruktur anliegenden Potenzials folgen. D.h. das Potenzial, mit welchem das Abschirmelement beaufschlagt werden kann, verläuft vorzugsweise im Wesentlichen entlang der gleichen Kurve, wie das an der Sensorstruktur anliegende Potenzial.

Besonders bevorzugt kann das Abschirmelement dabei mit dem gleichen absoluten elektrischen Potenzial beaufschlagt werden, das an der Sensorstruktur anliegt, d.h. mit den gleichen, absoluten Potenzialwerten. Dadurch kann die Grundkapazität des Sensorsystems in vielen Fällen nahezu auf null reduziert werden, so dass sich eine besonders hohe Auflösung des Sensorsystems erreichen lässt. D.h. dadurch kann erreicht werden, dass eine Annäherung und/oder Entfernung einer menschlichen Hand eine ausreichend große Änderung der kapazitiven Kopplung der Sensorstruktur mit der Umgebung und/oder einer Referenzelektrode bewirkt, die messtechnisch sicher erfasst werden kann. Je besser das elektrische Potenzial, mit welchem das Abschirmelement beaufschlagt wird, dem an der Sensorstruktur anliegendem Potenzial folgt, desto eine besser ist die erreichbare Abschirmwirkung.

Weist das Lenkrad eine Heizeinrichtung auf mit wenigstens einer elektrisch leitfähigen Heizstruktur zur Heizung des Lenkrades, wird in einer vorteilhaften Ausführungsform eines erfindungsgemäßen Verfahrens wenigstens eine Heizstruktur zumindest zeitweise als Sensorstruktur geschaltet und betrieben, wobei dazu vorzugsweise die Heizstruktur für die Zeit der Verwendung als Sensorstruktur allpolig abgeschaltet wird.

Weist das Lenkrad eine Heizeinrichtung auf mit wenigstens einer elektrisch leitfähigen Heizstruktur zur Heizung des Lenkrades, ist es in einigen Fällen auch vorteilhaft, wenn wenigstens eine Heizstruktur zumindest zeitweise als Referenzelektrode geschaltet und betrieben wird, vorzugsweise sämtliche Heizstrukturen.

Eine Heizstruktur und/oder der Lenkradkern können auch, zumindest zeitweise, alternativ oder zusätzlich zu einem eventuell vorhandenen weiteren Abschirmelement, als aktives Abschirmelement geschaltet und betrieben werden, insbesondere während der Erfassung einer Änderung der kapazitiven Kopplung einer Sensorstruktur mit der Umgebung und/oder einer Referenzelektrode, wobei dazu die Heizstruktur und/oder der Lenkradkern mit einem definierten, elektrischen Potenzial beaufschlagt werden, vorzugsweise mit einem Potenzial, das einem während der Erfassung der Änderung der kapazitiven Kopplung an der Sensorstruktur anliegenden Potenzial zumindest teilweise nachgeführt ist, insbesondere mit einem Potenzial, das dem Verlauf des an der Sensorstruktur anliegenden Potenzials folgt.

Die Verwendung einer Heizstruktur als Abschirmelement hat insbesondere den Vorteil, dass auf besonders einfache Art und Weise eine sich nachteilig auf die Erkennungsqualität einer Annäherung und/oder Entfernung einer menschlichen Hand auswirkende kapazitive Kopplung der Sensoreinrichtung mit der Heizeinrichtung im Zeitpunkt der Messung vermieden werden kann, insbesondere ohne die Anordnung eines zusätzlichen Abschirmelements zwischen der Heizeinrichtung und der Sensoreinrichtung.

Außerdem kann durch das Betreiben wenigstens einer Heizstruktur als aktives Abschirmelement eine störende Kopplung der Sensoreinrichtung mit dem Lenkradkern reduziert bzw. vermieden werden, was insbesondere im Fall eines metallischen Lenkradkerns vorteilhaft ist.

Das Betreiben wenigstens einer Heizstruktur als aktives Abschirmelement wirkt sich besonders vorteilhaft aus, wenn die als aktives Abschirmelement betriebene Heizstruktur mit wenigstens einer Sensorstruktur in derselben Ebene angeordnet ist, da auf diese Weise eine besonders gute Abschirmung dieser Sensorstruktur von umgebenden Kapazitäten erreicht werden kann, so dass eine noch größere Steigerung der Auflösung erzielt werden kann.

Es versteht sich von selbst, dass während der Zeit, in der die Heizstruktur als aktives Abschirmelement betrieben werden kann, kein Heizbetrieb dieser Heizstruktur möglich ist.

In einer bevorzugten Ausgestaltung ist das Sensorsystem zur Bestimmung eines Umfassungswinkels einer Hand an einem Lenkrad und/oder zur Bestimmung einer Handposition an einem Lenkrad in Umfangsrichtung ausgebildet.

Dabei ist eine Handposition in Umfangsrichtung detektierbar, wenn die Sensorstrukturen zumindest teilweise kämmend in Umfangsrichtung angeordnet sind. Ein Umfassungswinkel, d.h. um wie viel Grad das Lenkrad in seiner Dicke umfasst wird, kann hingegen detektiert werden, wenn die Sensorstrukturen entsprechend zumindest teilweise kämmend in Umfassungsrichtung angeordnet sind.

Je nach Unterteilung und Anordnung der Sensorstrukturen ist eine entsprechende Ortsauflösung möglich. Bevorzugt sind wenigstens zwei Sensorstrukturen in Umfangs- und/oder Umfassungsrichtung mit sich jeweils linear und komplementär zueinander änderndem Anteil zueinander angeordnet.

Zur Bestimmung eines Umfassungswinkels weist das Sensorsystem vorzugsweise wenigstens zwei in Umfassungsrichtung kämmend angeordnete Sensorstrukturen auf, wobei aus dem Verhältnis der erfassten Kapazitätsänderungen dieser Sensorstrukturen der Umfassungswinkel am Lenkrad bestimmbar ist.

Zur Bestimmung einer Handposition in Umfangsrichtung weist das Sensorsystem vorzugsweise entsprechend wenigstens zwei in Umfangsrichtung kämmend angeordnete Sensorstrukturen aufweist, wobei aus dem Verhältnis der erfassten Änderungen der kapazitiven Kopplungen dieser Sensorstrukturen mit der Umgebung und/oder einer Referenzelektrode die Handposition am Lenkrad in Umfangsrichtung bestimmbar ist.

Die Sensorstrukturen sind dabei vorzugsweise jeweils durch einzelne Drähte, Flachleiter, elektrisch leitfähige Gewebe und/oder Kombinationen daraus gebildet. Bevorzugt ist wenigstens eine Sensorstruktur flächig, besonders bevorzugt keilförmig, insbesondere dreieckförmig ausgebildet, wobei die Sensorstruktur dazu vorzugsweise ein Flachleiter oder eine elektrisch leitfähige Matte aufweist, insbesondere ein elektrisch leitfähiges Gewebe. Die Sensorstruktur kann aber auch nur durch wenigstens einen elektrischen Leiter, insbesondere durch einen Draht, gebildet sein, d.h. linienförmig ausgebildet sein. Besonders bevorzugt ist der Leiter in diesem Fall mäanderförmig angeordnet, so dass er sich über eine möglichst große Fläche erstreckt.

Besonders bevorzugt ist die Sensorstruktur dabei auf einem Träger aufgebracht, der unterhalb eines Lenkradbezugs angeordnet werden kann. Als besonders vorteilhaft hat sich beispielsweise eine Stofflage oder dergleichen als Träger erwiesen, wobei die Sensorstruktur in diesem Fall bevorzugt durch Sticken, Nähen oder dergleichen auf dem Träger aufgebracht ist

Bevorzugt weist dabei wenigstens eine Sensorstruktur zumindest einen Bereich auf, der die Form eines rechtwinkligen Dreiecks aufweist, wobei vorzugsweise eine Seitenkante der Sensorstruktur eine Hypotenuse bildet.

Besonders bevorzugt sind wenigstens zwei Sensorstrukturen keilförmig, vorzugsweise dreieckförmig ausgebildet und kämmend angeordnet, insbesondere zumindest mit jeweils einem Bereich, der die Form eines rechtwinkligen Dreiecks aufweist. Dabei sind die Sensorstrukturen vorzugsweise derart kämmend angeordnet, dass eine Seitenkante der einen Sensorstruktur zumindest teilweise parallel zur Seitenkante der anderen Sensorstruktur angeordnet ist, wobei insbesondere die jeweils die Hypotenuse bildenden Seitenkanten zumindest teilweise parallel zueinander angeordnet sind. Es hat sich gezeigt, dass mit derartig ausgebildeten und angeordneten Sensorstrukturen auf einfache Art und Weise eine gute Ortsauflösung erreicht werden kann.

Ein erfindungsgemäßes Lenkrad ist dadurch gekennzeichnet, dass es ein erfindungsgemäßes Sensorsystem aufweist, insbesondere ein erfindungsgemäßes Sensorsystem, das zur Hands-On-Off-Erkennung ausgebildet ist.

Ein erfindungsgemäßes Verfahren zum Betrieb eines entsprechenden Sensorsystems für ein Lenkrad eines Kraftfahrzeugs, insbesondere zum Betrieb eines erfindungsgemäßen Sensorsystems ist dadurch gekennzeichnet, dass in einem ersten Schritt die den einzelnen Sensorstrukturen zugeordneten Änderungen der kapazitiven Kopplungen mit der Umgebung und/oder einer Referenzelektrode erfasst werden und in wenigstens einem weiteren Schritt aus dem Verhältnis der erfassten, den einzelnen Sensorstrukturen zugeordneten Änderungen der kapazitiven Kopplungen eine Position einer menschlichen Hand, die sich im Detektionsbereich der Sensorstrukturen befindet, bestimmt wird.

Bei einer bevorzugten Ausführung des erfindungsgemäßen Verfahrens werden zur Bestimmung eines Umfassungswinkel beim Betrieb eines Sensorsystems mit wenigstens zwei, zumindest teilweise in Umfassungsrichtung kämmend angeordneten Sensorstrukturen die Änderungen der kapazitiven Kopplungen jeweils wenigstens zweier in Umfassungsrichtung kämmend angeordneter Sensorstrukturen erfasst. Anschließend wird aus dem Verhältnis der erfassten Änderungen der kapazitiven Kopplungen dieser Sensorstrukturen mit der Umgebung und/oder einer Referenzelektrode der Umfassungswinkel bestimmt.

Bei einer bevorzugten Ausführung des erfindungsgemäßen Verfahrens werden zur Bestimmung einer Handposition in Umfangsrichtung beim Betrieb eines Sensorsystems mit wenigstens zwei zumindest teilweise in Umfangsrichtung kämmend angeordneten Sensorstrukturen zunächst die Änderungen der kapazitiven Kopplungen jeweils wenigstens zweier in Umfangsrichtung kämmend angeordneter Sensorstrukturen erfasst. Anschließend wird aus dem Verhältnis der erfassten Änderungen der kapazitiven Kopplungen dieser Sensorstrukturen mit der Umgebung und/oder einer Referenzelektrode die Handposition in Umfangsrichtung bestimmt.

Die mit Bezug auf das Sensorsystem beschriebenen bevorzugten Ausgestaltungen und deren Vorteile gelten entsprechend für das erfindungsgemäße Lenkrad sowie für das erfindungsgemäße Verfahren und umgekehrt.

Weitere Merkmale der Erfindung ergeben sich aus den Figuren und der Figurenbeschreibung. Alle vorstehend in der Beschreibung im Zusammenhang mit dem Sensorsystem, dem Lenkrad oder dem Verfahren genannten Merkmale und Merkmalskombinationen sowie die nachfolgend in der Figurenbeschreibung genannten und/oder in den Figuren alleine gezeigten Merkmale und Merkmalskombinationen gelten jeweils nicht nur für das Sensorsystem, sondern jeweils auch für das Lenkrad sowie für das beschriebene Verfahren und sind jeweils nicht nur in den jeweils beschriebenen Kombinationen, sondern auch in anderen, technisch ausführbaren Kombinationen bzw. in Alleinstellung verwendbar.

Die Erfindung wird nun anhand mehrerer bevorzugter Ausführungsbeispiele sowie unter Bezugnahme auf die beigefügten Zeichnungen näher erläutert.

Es zeigen schematisch:
- Fig. 1a: ein erstes Ausführungsbeispiel eines erfindungsgemäßen Lenkrads mit einem erfindungsgemäßen Sensorsystem in Frontansicht,
- Fig. 1b: ein erfindungsgemäßes Ausführungsbeispiel für die Ausgestaltung der Sensorstrukturen eines erfindungsgemäßen Lenkrads mit teilweise kämmend angeordneten Sensorstrukturen in Umfassungsrichtung in abgewickelter Darstellung und
- Fig. 2: ein alternatives, erfindungsgemäßes Ausführungsbeispiel für die Ausgestaltung der Sensorstrukturen eines erfindungsgemäßen Lenkrads mit kämmend angeordneten Sensorstrukturen in Umfangsrichtung in abgewickelter Darstellung.

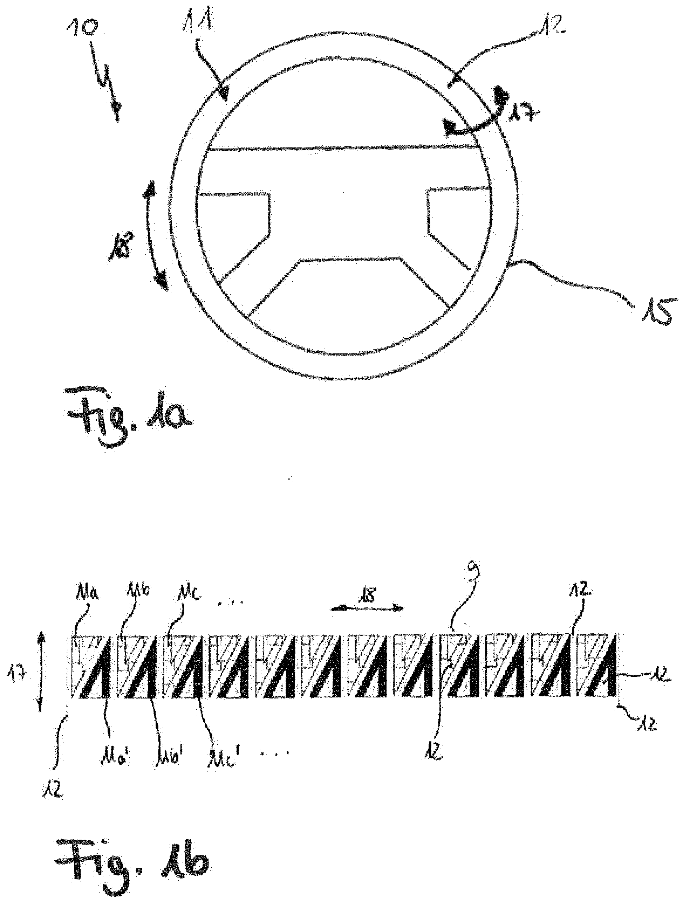

Fig. 1a zeigt ein erstes Ausführungsbeispiel eines erfindungsgemäßen Lenkrads 10 mit einem erfindungsgemäßen Sensorsystem mit einer kapazitiven Sensoreinrichtung in Frontansicht, wobei das Lenkrad 10 eine unterhalb eines Lenkradbezugs 15 angeordnete kapazitive Sensoreinrichtung mit einer Vielzahl an Sensorstrukturen 11 aufweist, die in dieser Darstellung allerdings jeweils nur durch einen Bezugspfeil schematisch angedeutet sind. Außerdem ist bei diesem Lenkrad 10 zusätzlich eine Heizeinrichtung mit einer Heizstruktur 12 vorgesehen, welche ebenfalls nur durch den Bezugspfeil schematisch angedeutet ist. Die Sensorstrukturen 11 und die Heizstruktur 12 erstrecken sich dabei in ihrer Gesamtheit sowohl vollständig umlaufend in Umfassungsrichtung 17, als auch vollständig umlaufend in Umfangsrichtung 18. D.h. die Sensorstruktur 11 und die Heizstruktur 12 decken nahezu den gesamten Greifbereich der Lenkradfläche ab.

Das erfindungsgemäße Sensorsystem ist zur Erkennung der Anwesenheit einer menschlichen Hand bzw. eines Fingers im Detektionsbereich der Sensorstrukturen 11 ausgebildet, insbesondere zur Erkennung einer Annäherung und/oder Entfernung einer menschlichen Hand an das Lenkrad 10, d.h. zur Hands-On-Off-Erkennung.

Die Heizstrukturen 12 und die durch diese gebildete Sensorstrukturen 11 sind dabei auf einem Träger 9 aus einem dünnen Stoff aufgestickt, welcher in Fig. 1b in abgewickelter Darstellung gezeigt ist.

Bei diesem Ausführungsbeispiel weist das Sensorsystem insgesamt 12 Paare von miteinander kämmend angeordneten Sensorstrukturen 11a, 11a', 11b, 11b'; 11c, 11c';... auf, welche jeweils durch elektrisch leitfähige Gewebematten gebildet werden in Form rechtwinkliger Dreiecke und in Umfassungsrichtung 17 abschnittsweise und ineinander kämmend verteilt angeordnet sind, so dass bei der Annäherung einer menschlichen Hand an das Lenkrad mindestens die kapazitive Kopplung mit der Umgebung und/oder einer Referenzelektrode zweier Sensorstrukturen 11a/11a', 11b/11b', 11c/11c',... verändert werden.

Die Auswertung der Änderungen der kapazitiven Kopplungen mit der Umgebung und/oder einer Referenzelektrode der einzelnen Sensorstrukturen 11a/11a', 11b/11b', 11c/11c',... erlaubt die eindeutige Ermittlung der Position der Annäherung der menschlichen Hand, da jeder Position ein eindeutiges Wertepaar an Änderungen der kapazitiven Kopplungen zugeordnet ist bzw. da sich aus jeder Kombination von Änderungen der kapazitiven Kopplungen der zugehörigen Sensorstrukturen 11a/11a', 11b/11b', 11c/11c',... anhand der Verhältnisse der Änderungen der kapazitiven Kopplungen der beiden jeweils reagierenden Sensorstrukturen 11a/11a', 11b/11b', 11c/11c',... jeweils eine eindeutige Annäherungsposition bzw. -richtung ermitteln lässt.

Die einzelnen Sensorstrukturen 11a, 11a', 11b, 11b'; 11c, 11c,... eines "Sensorstrukturpaares" 11a/11a', 11b/11b', 11c/11c',...sind dabei derart kämmend angeordnet, dass eine Seitenkante der einen Sensorstruktur, in diesem Fall die Hypotenuse, parallel zur Seitenkante der anderen Sensorstruktur angeordnet ist, welche in diesem Fall ebenfalls die Hypotenuse ist. Durch eine derartige Anordnung und Unterteilung der Sensorstrukturen 11a/11a', 11b/11b', 11c/11c',...über die Lenkradfläche, ist es möglich eine Handposition in Umfassungsrichtung 17 ortsaufgelöst zu detektieren sowie sektorweise die Handposition im Umfangsrichtung 18 zu erfassen.

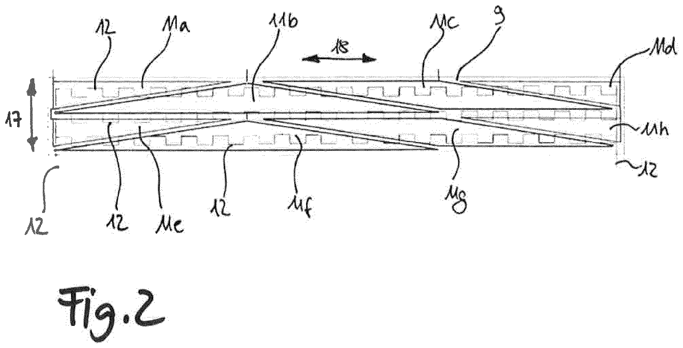

Erfolgt die kämmende bzw. überschneidende Anordnung bzw. die Verschachtelung der Sensorstrukturen 11a, 11b, 11c, ... 11h, wie bei dem in Fig. 2 gezeigten Ausführungsbeispiel, lässt sich nach dem vorstehend beschriebenen Prinzip sowohl eine Handposition in Umfangsrichtung 18 als auch ein Umfassungswinkel in Umfassungsrichtung 18 ermitteln.

Die Heizstrukturen 12 werden bei den beiden beschriebenen Ausführungsbeispielen jeweils durch elektrische Leiter in Form von Widerstandsdrähten gebildet, welche mäanderförmig quer über die Sensorstrukturen 11 verlaufen und von diesen elektrisch isoliert sind, wobei das Sensorsystem bevorzugt derart ausgebildet ist, dass die Sensoreinrichtung und die Heizeinrichtung mit den Heizstrukturen 12 derart aufeinander abgestimmt angesteuert werden können, dass eine störende kapazitive Kopplung der Sensoreinrichtung mit Komponenten des Sensorsystems und/oder in einem funktionsgemäßen Einbauzustand des Sensorsystems in einem Lenkrad mit Komponenten des Lenkrads reduziert, insbesondere vermieden wird.

Bei den beiden beschriebenen Ausführungsbeispielen können die Heizstrukturen 12 dazu, insbesondere zur Erhöhung der Erkennungsgenauigkeit des Sensorsystems während der Erfassung einer Änderung der kapazitiven Kopplung der Sensorstrukturen 11a/11a', 11b/11b', 11c/11c',... mit der Umgebung und/oder einer Referenzelektrode, als aktives Abschirmelement betrieben werden und mit einem definierten elektrischen Potenzial beaufschlagt werden, was dem an den betreffenden Sensorstrukturen 11a/11a', 11b/11b', 11c/11c',...anliegenden Potenzial nachgeführt ist bzw. diesem insbesondere folgt.

Dabei sind die Heizstrukturen 12 vorzugsweise derart ausgebildet, dass die Beaufschlagung der Heizstrukturen 12 mit dem definierten elektrischen Potenzial eine Abschirmung der Sensoreinrichtung gegenüber störenden kapazitiven Kopplungen mit Komponenten des Lenkrads 10 bewirkt, insbesondere gegenüber einem Lenkradkern.

D.h., wenn das Lenkrad 10 eine Heizeinrichtung mit wenigstens einer elektrisch leitfähigen Heizstruktur 12 aufweist, dass in einer besonders bevorzugten Ausgestaltung eines erfindungsgemäßen Lenkrads 10 wenigstens eine Heizstruktur 12 als aktives Abschirmelement betrieben werden kann, wobei die Heizstruktur 12 insbesondere alternativ oder zusätzlich zu einem anderen Abschirmelement, beispielsweise alternativ oder zusätzlich zu einem separaten Abschirmelement, als aktives Abschirmelement betrieben werden kann.

Selbstverständlich kann auch jeweils alternativ oder zusätzlich wenigstens ein separates Abschirmelement vorgesehen sein, beispielsweise ein elektrisch leitendes, flächiges Abschirmelement, um die Sensorstrukturen 11a/11a', 11b/11b', 11c/11c',... kapazitiv von weiteren Komponenten zu entkoppeln, beispielsweise von einem metallischen Lenkradkern. Vorzugsweise kann ein derartiges Abschirmelement dabei als aktives Abschirmelement betrieben werden und entsprechend mit einem definierten elektrischen Potenzial beaufschlagt werden.

Es ist aber auch denkbar, dass wenigstens eine Sensorstruktur 11 durch eine Heizstruktur gebildet wird, d.h. dass wenigstens eine der dreieckförmigen Sensorstrukturen 11a/11a', 11b/11b', 11c/11c',...eine Heizstruktur ist. In diesem Fall muss das Sensorsystem allerdings derart ausgebildet sein, dass die Heizstruktur während der Erfassung der Änderung der kapazitiven Kopplung der Sensorstruktur mit der Umgebung und/oder einer Referenzelektrode allpolig abgeschaltet werden kann, d.h. sowohl vom Pluspol als auch vom Minuspol vollständig getrennt werden kann.

Um den Energieverbrauch für die Heizeinrichtung so gering wie möglich zu halten, sind die beiden vorbeschriebenen Sensorsysteme ferner dazu ausgebildet, die Heizeinrichtung bzw. die zughörigen Heizstrukturen 12 in Abhängigkeit von einer erkannten Handposition anzusteuern und insbesondere in einem funktionsgemäßen Einbauzustand des erfindungsgemäßen Sensorsystems in einem erfindungsgemäßen Lenkrad das Lenkrad nur in dem Bereich zu beheizen, in welchem sich die Hand bzw. ein erkannter Finger oder dergleichen befindet.

Selbstverständlich ist eine Vielzahl konstruktiver Abwandlungen möglich, insbesondere betreffend die Ausgestaltung und Anordnung der Sensorstrukturen.

## Patentansprüche

1. Sensorsystem für ein Lenkrad (10) eines Kraftfahrzeugs mit wenigstens einer kapazitiven Sensoreinrichtung und einer Steuereinrichtung zur Ansteuerung der Sensoreinrichtung, wobei die kapazitive Sensoreinrichtung wenigstens zwei elektrisch leitfähige Sensorstrukturen (11) aufweist und zur Erkennung einer Anwesenheit einer menschlichen Hand in einem Greifbereich eines Lenkrads ausgebildet ist, wobei das Sensorsystem derart ausgebildet ist, dass die Anwesenheit einer menschlichen Hand in einem Detektionsbereich einer Sensorstruktur jeweils eine erfassbare, der jeweiligen Sensorstruktur zugeordnete Änderung einer kapazitiven Kopplung der Sensorstruktur mit der Umgebung und/oder einer Referenzelektrode gegenüber einem Referenzzustand ohne Anwesenheit einer Hand in diesem Detektionsbereich bewirkt, wobei die wenigstens zwei Sensorstrukturen (11) zumindest teilweise kämmend angeordnet sind und zur Anordnung im Greifbereich eines Lenkrads vorgesehen sind, **dadurch gekennzeichnet dass** das Sensorsystem derart ausgebildet ist,
dass aus dem Verhältnis der erfassten, den einzelnen Sensorstrukturen (11) zugeordneten Änderungen der kapazitiven Kopplungen mit der Umgebung und/oder einer Referenzelektrode eine Position einer menschlichen Hand, die sich im Detektionsbereich der Sensorstrukturen (11) befindet, bestimmbar ist.

2. Sensorsystem nach Anspruch 1, **dadurch gekennzeichnet, dass** das Sensorsystem zur Bestimmung eines Umfassungswinkels einer Hand an einem Lenkrad (10) und/oder zur Bestimmung einer Handposition an einem Lenkrad (10) in Umfangsrichtung (18) ausgebildet ist.

3. Sensorsystem nach Anspruch 1 oder 2, **dadurch gekennzeichnet, dass** wenigstens zwei Sensorstrukturen (11) kämmend angeordnet sind.

4. Sensorsystem nach Anspruch 3, **dadurch gekennzeichnet, dass** das Sensorsystem zur Bestimmung eines Umfassungswinkels wenigstens zwei in Umfassungsrichtung (17) kämmend angeordnete Sensorstrukturen (11) aufweist, wobei aus dem Verhältnis der erfassten Kapazitätsänderungen dieser Sensorstrukturen (11) der Umfassungswinkel am Lenkrad (10) bestimmbar ist.

5. Sensorsystem nach Anspruch 3 oder 4, **dadurch gekennzeichnet, dass** das Sensorsystem zur Bestimmung einer Handposition wenigstens zwei in Umfangsrichtung (18) kämmend angeordnete Sensorstrukturen (11) aufweist, wobei aus dem Verhältnis der erfassten Änderungen der kapazitiven Kopplungen dieser Sensorstrukturen (11) mit der Umgebung und/oder einer Referenzelektrode die Handposition am Lenkrad (10) in Umfangsrichtung (18) bestimmbar ist.

6. Sensorsystem nach einem der vorgenannten Ansprüche, **dadurch gekennzeichnet, dass** wenigstens eine Sensorstruktur flächig ausgebildet ist, vorzugsweise keilförmig, insbesondere dreieckförmig.

7. Sensorsystem nach einem der vorgenannten Ansprüche, insbesondere nach Anspruch 6, **dadurch gekennzeichnet, dass** wenigstens eine Sensorstruktur zumindest einen Bereich aufweist, der die Form eines rechtwinkligen Dreiecks aufweist, wobei vorzugsweise eine Seitenkante der Sensorstruktur eine Hypotenuse bildet.

8. Sensorsystem nach Anspruch 3 und 6 oder 7, **dadurch gekennzeichnet, dass** wenigstens zwei Sensorstrukturen (11) keilförmig, vorzugsweise dreieckförmig ausgebildet sind, insbesondere zumindest mit jeweils einem Bereich, der die Form eines rechtwinkligen Dreiecks aufweist, und kämmend angeordnet sind, wobei die Sensorstrukturen (11) vorzugsweise derart kämmend angeordnet sind, dass eine Seitenkante der einen Sensorstruktur zumindest teilweise parallel zur Seitenkante der anderen Sensorstruktur angeordnet ist, wobei insbesondere die jeweils die Hypotenuse bildenden Seitenkanten zumindest teilweise parallel zueinander angeordnet sind.

9. Lenkrad (10) für ein Kraftfahrzeug mit einem Sensorsystem, wobei das Sensorsystem zur Erkennung einer Anwesenheit einer menschlichen Hand in einem Greifbereich des Lenkrads ausgebildet ist und wenigstens eine kapazitive Sensoreinrichtung und eine Steuereinrichtung zur Ansteuerung der Sensoreinrichtung aufweist,
**dadurch gekennzeichnet, dass** das Sensorsystem nach einem der Ansprüche 1 bis 8 ausgebildet ist.

10. Verfahren zum Betrieb eines Sensorsystems für ein Lenkrad (10) eines Kraftfahrzeugs, zum Betrieb eines Sensorsystems, das nach einem der Ansprüche 1 bis 8 ausgebildet ist, wobei das Sensorsystem eine kapazitive Sensoreinrichtung und eine Steuereinrichtung zur Ansteuerung der Sensoreinrichtung aufweist, wobei die kapazitive Sensoreinrichtung wenigstens zwei elektrisch leitfähige Sensorstrukturen (11) aufweist, die zumindest teilweise kämmend angeordnet sind und zur Anordnung in einem Greifbereich eines Lenkrads vorgesehen sind, wobei das Sensorsystem zur Erkennung einer Anwesenheit einer menschlichen Hand im Greifbereich eines Lenkrads ausgebildet ist, wobei die Anwesenheit einer menschlichen Hand in einem Detektionsbereich einer Sensorstruktur jeweils eine erfassbare, der jeweiligen Sensorstruktur zugeordnete Änderung einer kapazitiven Kopplung der Sensorstruktur mit der Umgebung und/oder einer Referenzelektrode gegenüber einem Referenzzustand ohne Anwesenheit einer Hand in diesem Detektionsbereich bewirkt,
**dadurch gekennzeichnet, dass** in einem ersten Schritt die den einzelnen Sensorstrukturen (11) zugeordneten Änderungen der kapazitiven Kopplungen mit der Umgebung und/oder einer Referenzelektrode erfasst werden und in wenigstens einem weiteren Schritt aus dem Verhältnis der erfassten, den einzelnen Sensorstrukturen (11) zugeordneten Änderungen der kapazitiven Kopplungen eine Position einer menschlichen Hand, die sich im Detektionsbereich der Sensorstrukturen (11) befindet, bestimmt wird.

11. Verfahren nach Anspruch 10 zum Betrieb eines Sensorsystems mit wenigstens zwei, zumindest teilweise in Umfassungsrichtung (17) kämmend angeordneten Sensorstrukturen, **dadurch gekennzeichnet, dass** zur Bestimmung eines Umfassungswinkel die Änderungen der kapazitiven Kopplungen jeweils wenigstens zweier in Umfassungsrichtung (17) kämmend angeordneter Sensorstrukturen (11) erfasst werden und aus dem Verhältnis der erfassten Änderungen der kapazitiven Kopplungen dieser Sensorstrukturen (11) mit der Umgebung und/oder einer Referenzelektrode der Umfassungswinkel bestimmt wird.

12. Verfahren nach Anspruch 10 oder 11 zum Betrieb eines Sensorsystems mit wenigstens zwei zumindest teilweise in Umfangsrichtung (18) kämmend angeordneten Sensorstrukturen, **dadurch gekennzeichnet, dass** zur Bestimmung einer Handposition in Umfangsrichtung (18) die Änderungen der kapazitiven Kopplungen jeweils wenigstens zweier in Umfangsrichtung (18) kämmend angeordneter Sensorstrukturen (11) erfasst werden und aus dem Verhältnis der erfassten Änderungen der kapazitiven Kopplungen dieser Sensorstrukturen (11) mit der Umgebung und/oder einer Referenzelektrode die Handposition in Umfangsrichtung (18) bestimmt wird.

## Claims

1. Sensor system for a steering wheel (10) of a motor vehicle having at least one capacitive sensor device and a control device for actuating the sensor device, wherein the capacitive sensor device has at least two electrically conductive sensor structures (11) and is designed to detect the presence of a human hand in a gripping region of a steering wheel, wherein the sensor system is embodied in such a way that the presence of a human hand in a detection region of a sensor structure respectively brings about a perceptible change, assigned to the respective sensor structure, in capacitive coupling of the sensor structure to the surroundings and/or to a reference electrode in comparison with a reference state without the presence of a hand in this detection region, wherein the at least two sensor structures (11) are arranged in an at least partially meshing fashion and are provided for arrangement in the gripping region of a steering wheel, **characterized in that** the sensor system is embodied in such a way that a position of a human hand which is located in the detection region of the sensor structures (11) can be determined from the ratio of the sensed changes, assigned to the individual sensor structures (11), in the capacitive coupling to the surroundings and/or to a reference electrode.

2. Sensor system according to Claim 1, **characterized in that** the sensor system is designed to determine a grasping angle of a hand on a steering wheel (10) and/or to determine a hand position on a steering wheel (10) in the circumferential direction (18).

3. Sensor system according to Claim 1 or 2, **characterized in that** at least two sensor structures (11) are arranged in a meshing fashion.

4. Sensor system according to Claim 3, **characterized in that** the sensor system has, for the purposes of determining a grasping angle, at least two sensor structures (11) which are arranged in a meshing fashion in the circumferential direction (17), wherein the grasping angle on the steering wheel (10) can be determined from the ratio of the sensed changes in capacitance of these sensor structures (11) .

5. Sensor system according to Claim 3 or 4, **characterized in that** the sensor system has, for the purpose of determining a hand position, at least two sensor structures (11) which are arranged in a meshing fashion in the circumferential direction (18), wherein the hand position on the steering wheel (10) in the circumferential direction (18) can be determined from the ratio of the sensed changes in the capacitive coupling of these sensor structures (11) to the surroundings and/or to a reference electrode.

6. Sensor system according to one of the preceding claims, **characterized in that** at least one sensor structure is embodied in a planar fashion, preferably in a wedge-shaped fashion, in particular in a triangular fashion.

7. Sensor system according to one of the preceding claims, in particular according to Claim 6, **characterized in that** at least one sensor structure has at least one region which is in the shape of a right-angled triangle, wherein preferably one side edge of the sensor structure forms a hypotenuse.

8. Sensor system according to Claims 3 and 6 or 7, **characterized in that** at least two sensor structures (11) are embodied in a wedge-shaped fashion, preferably in a triangular fashion, in particular with in each case one region which is in the shape of a right-angled triangle and are arranged in a meshing fashion, wherein the sensor structures (11) are preferably arranged in a meshing fashion in such a way that a side edge of the one sensor structure is arranged at least partially parallel to the side edge of the other sensor structure, wherein in particular the side edges which respectively form the hypotenuse are arranged at least partially parallel to one another.

9. Steering wheel (10) for a motor vehicle having a sensor system, wherein the sensor system is designed to detect the presence of a human hand in a gripping region of the steering wheel and has at least one capacitive sensor device and one control device for actuating the sensor device, **characterized in that** the sensor system is embodied according to one of Claims 1 to 8.

10. Method for operating a sensor system for a steering wheel (10) of a motor vehicle for operating a sensor system which is embodied according to one of Claims 1 to 8, wherein the sensor system has a capacitive sensor device and a control device for actuating the sensor device, wherein the capacitive sensor device has at least two electrically conductive sensor structures (11) which are arranged in an at least partially meshing fashion and are provided for arrangement in a gripping region of a steering wheel, wherein the sensor system is designed to detect the presence of a human hand in the gripping region of a steering wheel, wherein the presence of a human hand in a detection region of a sensor structure brings about in each case a perceptible change, assigned to the respective sensor structure, in the capacitive coupling of the sensor structure to the surroundings and/or to a reference electrode in comparison with a reference state without the presence of a hand in this detection region, **characterized in that** in a first step the changes, assigned to the individual sensor structures (11), in the capacitive coupling to the surroundings and/or to a reference electrode are sensed, and in at least one further step a position of a human hand which is located in the detection region of the sensor structures (11) is determined from the ratio of the sensed changes, assigned to the individual sensor structures (11), in the capacitive coupling.

11. Method according to Claim 10 for operating a sensor system having at least two sensor structures which are arranged at least partially in a meshing fashion in the grasping direction (17), **characterized in that** in order to determine a grasping angle the changes in the capacitive coupling of in each case at least two sensor structures (11) which are arranged in a meshing fashion in the grasping direction (17) are sensed, and the grasping angle is determined from the ratio of the sensed changes in the capacitive coupling of these sensor structures (11) to the surroundings and/or to a reference electrode.

12. Method according to Claim 10 or 11 for operating a sensor system having at least two sensor structures which are arranged in an at least partially meshing fashion in the circumferential direction (18), **characterized in that** in order to determine a hand position in the circumferential direction (18) the changes in the capacitive coupling of in each case at least two sensor structures (11) which are arranged in a meshing fashion in the circumferential direction (18) are sensed, and the hand position in the circumferential direction (18) is determined from the ratio of the sensed changes in the capacitive coupling of these sensor structures (11) to the surroundings and/or to a reference electrode.

## Revendications

1. Système de détection destiné à un volant (10) d'un véhicule automobile et comprenant au moins un dispositif de détection capacitif et un dispositif de commande destiné à commander le dispositif de détection, le dispositif de détection capacitif comportant au moins deux structures de détection électriquement conductrices (11) et étant conçu pour détecter la présence d'une main humaine dans une zone de préhension d'un volant, le système de détection étant conçu de telle sorte que la présence d'une main humaine dans une zone de détection d'une structure de détection cause à chaque fois une variation détectable, associée à la structure de détection respective, d'un couplage capacitif de la structure de détection avec l'environnement et/ou une électrode de référence par rapport à un état de référence sans la présence d'une main dans cette zone de détection, les au moins deux structures de détection (11) étant disposées de manière à s'engrener au moins partiellement et étant prévues pour être disposées dans la zone de préhension d'un volant, **caractérisé en ce que** le système de détection est conçu de manière à ce qu'une position d'une main humaine, située dans la zone de détection des structures de détection (11), puisse être déterminée à partir du rapport des variations détectées, associées aux structures de détection individuelles (11), des couplages capacitifs avec l'environnement et/ou une électrode de référence.

2. Système de détection selon la revendication 1, **caractérisé en ce que** le système de détection est conçu pour déterminer un angle circonférentiel d'une main sur un volant (10) et/ou pour déterminer une position de la main sur un volant (10) dans la direction circonférentielle (18).

3. Système de détection selon la revendication 1 ou 2, **caractérisé en ce qu'**au moins deux structures de détection (11) sont disposées de manière à s'engrener.

4. Système de détection selon la revendication 3, **caractérisé en ce que**, pour déterminer un angle circonférentiel, le système de détection comporte au moins deux structures de détection (11) disposées de manière à s'engrener dans la direction circonférentielle (17), l'angle circonférentiel sur le volant (10) pouvant être déterminé à partir du rapport des variations de capacité détectées de ces structures de détection (11).

5. Système de détection selon la revendication 3 ou 4, **caractérisé en ce que**, pour déterminer une position de la main, le système de détection comporte au moins deux structures de détection (11) disposées de manière à s'engrener dans la direction circonférentielle (18), la position de la main sur le volant (10) dans la direction circonférentielle (18) pouvant être déterminée à partir du rapport des variations détectées des couplages capacitifs de ces structures de détection (11) avec l'environnement et/ou une électrode de référence.

6. Système de détection selon l'une des revendications précédentes, **caractérisé en ce qu'**au moins une structure de détection est conçue pour être sensiblement bidimensionnelle, de préférence en forme de coin, en particulier en forme de triangle.

7. Système de détection selon l'une des revendications précédentes, notamment selon la revendication 6, **caractérisé en ce qu'**au moins une structure de détection comporte au moins une zone qui a la forme d'un triangle rectangle, un côté de la structure de détection formant de préférence l'hypoténuse.

8. Système de détection selon la revendication 3 et 6 ou 7, **caractérisé en ce qu'**au moins deux structures de détection (11) sont en forme de coin, de préférence en forme de triangle, en particulier chacune comportant au moins une zone en forme de triangle rectangle et étant disposée de manière à s'engrener, les structures de détection (11) étant de préférence disposées de telle manière qu'un côté d'une structure de détection soit disposé au moins en partie parallèlement au côté de l'autre structure de détection, en particulier les côtés qui forment les hypoténuses étant disposés au moins en partie parallèlement les uns aux autres.

9. volant (10) destiné à un véhicule automobile et comprenant un système de détection, le système de détection étant conçu pour détecter la présence d'une main humaine dans une zone de préhension du volant et comportant au moins un dispositif de détection capacitif et un dispositif de commande destiné à commander le dispositif de détection,
**caractérisé en ce que** le système de détection est conçu selon l'une des revendications 1 à 8.

10. Procédé de fonctionnement d'un système de détection, destiné à un volant (10) d'un véhicule automobile, pour faire fonctionner un système de détection qui est conçu selon l'une des revendications 1 à 8, le système de détection comportant un dispositif de détection capacitif et un dispositif de commande destiné à commander le dispositif de détection, le dispositif de détection capacitif comportant au moins deux structures de détection électriquement conductrices (11) qui sont disposées au moins en partie de manière à s'engrener et qui sont prévues pour être disposées dans une zone de préhension d'un volant, le système de détection étant conçu pour détecter la présence d'une main humaine dans la zone de préhension d'un volant, la présence d'une main humaine dans une zone de détection d'une structure de détection causant une variation détectable, associée à la structure de détection respective, d'un couplage capacitif de la structure de détection avec l'environnement et/ou une électrode de référence par rapport à un état de référence sans la présence d'une main dans cette zone de détection,
**caractérisé en ce que**, dans une première étape, les variations, associées aux structures de détection individuelles (11), des couplages capacitifs avec l'environnement et/ou une électrode de référence sont détectées et, dans au moins une étape supplémentaire, une position d'une main humaine située dans la zone de détection des structures de détection (11) est déterminée à partir du rapport des variations détectées, associées aux structures de détection individuelles (11), des couplages capacitifs.

11. Procédé, selon la revendication 10, de fonctionnement d'un système de détection comprenant au moins deux structures de détection qui s'engrènent au moins partiellement dans la direction circonférentielle (17), **caractérisé en ce que**, pour déterminer un angle circonférentiel, les variations des couplages capacitifs à chaque fois d'au moins deux structures de détection (11), disposées de manière à s'engrener dans la direction circonférentielle (17), sont détectées et l'angle circonférentiel est déterminé à partir du rapport des variations détectées des couplages capacitifs de ces structures de détection (11) avec l'environnement et/ou une électrode de référence.

12. Procédé, selon la revendication 10 ou 11, de fonctionnement d'un système de détection comprenant au moins deux structures de détection disposées de manière à s'engrener au moins partiellement dans la direction circonférentielle (18), **caractérisé en ce que**, pour déterminer une position de la main dans la direction circonférentielle (18), les variations des couplages capacitifs à chaque fois d'au moins deux structures de détection (11) disposées de manière à s'engrener dans la direction circonférentielle (18) sont détectées et la position de la main dans la direction circonférentielle (18) est déterminée à partir du rapport des variations détectées des couplages capacitifs de ces structures de détection (11) avec l'environnement et/ou une électrode de référence.
